# FASCICULE DE BREVET EUROPEEN

(11) **EP 3 643 856 B1**
(45) Date de publication et mention de la délivrance du brevet: **19.05.2021**
(21) Numéro de dépôt: 19204819.7
(22) Date de dépôt: 23.10.2019
(51) Int. Cl.: E04H 17/10, E04H 17/14, A01K 1/06

(54) **DISPOSITIF DE LISSE RABATTABLE POUR UNE BARRIERE D'ENCEINTE POUR ANIMAUX D'ELEVAGE**
VORRICHTUNG MIT KLAPPBALKEN FÜR EINE SCHRANKE EINES RAUMS FÜR ZUCHTTIERE
DEVICE WITH FOLDING PLATE FOR A BARRIER FOR ENCLOSING CATTLE

(30) Priorité: 26.10.2018 FR 1859967
(43) Date de publication de la demande: 29.04.2020
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- EP-A1- 1 801 323
- AU-A- 2 178 477
- FR-A1- 2 742 307
- FR-A1- 2 808 416

## Description

### DOMAINE TECHNIQUE

Le présent exposé concerne un dispositif de lisse rabattable pour une barrière d'enceinte pour animaux d'élevage tels que du bétail.

Par exemple, l'enceinte peut être un couloir de contention dans lequel on fait circuler les animaux pour les conduire d'un point à un autre, par exemple pour les changer d'enclos ou les faire monter dans un engin, ou encore les soumettre à un traitement dans un espace dédié. Cependant, l'enceinte peut être d'un autre type, par exemple un enclos, ou une enceinte de traitement des animaux, servant par exemple à la traite ou aux soins. Il peut encore s'agir d'un passage sélectif dédié à certains animaux d'un cheptel, par exemple les veaux.

### ARRIERE-PLAN

De manière classique, les dispositifs de lisse rabattable sont utilisés pour définir une position active de lisse dans laquelle la lisse contribue à former l'obstacle que constitue la barrière d'enceinte et une position inactive dans laquelle les dimensions de la barrière d'enceinte sont diminuées par le rabat de la lisse. En particulier, la lisse peut être disposée en partie haute de la barrière d'enceinte, pour définir une barrière haute en position active et une barrière de hauteur moindre en position inactive. Ceci permet par exemple à l'éleveur d'accéder plus aisément à certaines parties du corps des animaux lorsque la lisse est en position rabattue. Elle peut encore être disposée en position rabattue pour adapter les dimensions de la barrière à des animaux de plus petite taille.

Ainsi, les dispositifs de la lisse rabattable comprennent classiquement au moins un élément de lisse configuré pour être disposé entre des montants de barrière en étant capable de pivoter autour d'un axe horizontal entre la position active et la position inactive.

Il importe bien entendu que la position active de l'élément de lisse soit stable. Pour cela, des moyens de verrouillage peuvent être prévus, grâce auxquels, dans la position active, les extrémités de l'élément de lisse sont verrouillées par rapport aux montants. Cependant, l'élément de lisse peut présenter une longueur relativement importante, par exemple de l'ordre de 2 mètres, de sorte que, dans la pratique, le déverrouillage de l'élément de lisse nécessite soit de déverrouiller l'un après l'autre les deux verrous situés aux deux extrémités de l'élément de lisse, soit de faire appel à deux personnes actionnant simultanément chacune l'un de ces verrous. Le document FR2742307 décrit un dispositif de lisse rabattable qui comprend les caractéristiques du préambule de la revendication 1.

### OBJET ET RESUME

L'exposé vise à améliorer cet état de la technique en facilitant l'opération de déverrouillage et de rabat de l'élément de lisse vers sa position rabattue.

Dans ce but, le dispositif de lisse rabattable selon le présent exposé comprend un élément de lisse configuré pour être disposé entre des montants de barrière en étant capable de pivoter autour d'un axe horizontal entre une position active et une position rabattue, et des moyens de verrouillage pour verrouiller les extrémités de l'élément de lisse par rapport aux montants dans la position active, les moyens de verrouillage comprenant deux pênes de verrouillage portés par l'élément de lisse, chaque pêne de verrouillage étant relié à une poignée de commande située dans une zone centrale de l'élément de lisse pour commander le déplacement du pêne de verrouillage entre des positions de verrouillage et de déverrouillage.

Ainsi, les poignées de commande des pênes de verrouillage sont ramenées dans la zone centrale de l'élément de lisse. Ces poignées peuvent donc être aisément manipulées par une même personne se positionnant vers cette zone centrale. De plus, cette personne étant positionnée ainsi, il lui est facile de rabattre la lisse d'un seul geste sans risque de porte-à-faux puisqu'elle tient alors l'élément de lisse dans sa région centrale.

Optionnellement, la zone centrale est située dans le tiers central de l'élément de lisse.

Optionnellement, les pênes de verrouillage s'étendent à l'intérieur de l'élément de lisse tandis que les poignées de commande sont situées à l'extérieur dudit élément, chaque pêne de verrouillage étant relié à sa poignée de commande par un élément transversal de liaison traversant une lumière de la zone centrale de l'élément de lisse.

Optionnellement, le dispositif de lisse comprend pour chaque pêne au moins un palier de guidage du déplacement du pêne entre les positions de verrouillage et de déverrouillage.

Optionnellement, les paliers de guidage comprennent au moins une projection interne à l'élément de lisse, ladite projection comprenant optionnellement un repli interne formé en creux sur la périphérie externe de l'élément de lisse ou une pièce, en particulier de type fer plat, rapportée en travers de l'élément de lisse.

Optionnellement, chaque poignée de commande comprend un manchon entourant localement l'élément de lisse.

Optionnellement, le dispositif de lisse comprend un rappel élastique sollicitant les pênes de verrouillage vers leurs positions de verrouillage.

Optionnellement, le dispositif de lisse comprend un ressort commun aux deux pênes de verrouillage, qui s'étend entre deux sièges respectivement solidaires de chacune des deux poignées.

Optionnellement, le dispositif de lisse comprend, pour chaque pêne de verrouillage, un ressort coopérant avec un siège mobile avec la poignée du pêne de verrouillage et un arrêt fixe par rapport à l'élément de lisse, ledit arrêt fixe comprenant optionnellement un repli interne formé en creux sur la périphérie externe de l'élément de lisse ou une pièce en particulier un fer plat, rapportée dans l'élément de lisse.

Optionnellement, le dispositif de lisse comprend deux bras, fixés aux extrémités respectives de l'élément de lisse et configurés pour être montés à pivotement sur les montants de barrière.

Optionnellement, les bras s'étendent en travers des extrémités de l'élément de lisse.

Optionnellement, les portions des bras qui s'étendent en travers des extrémités de l'élément de lisse présentent des perçages pour le passage des pênes de verrouillage respectifs.

L'exposé concerne également un dispositif de barrière d'enceinte pour animaux d'élevage tels que du bétail, comprenant une structure de barrière ayant des montants de barrière et un dispositif de lisse selon le présent exposé, qui est disposé entre lesdits montants.

Optionnellement, les montants de barrière présentent des gâches coopérant avec les pênes de verrouillage respectifs dans leurs positions de verrouillage, le dispositif de barrière présentant optionnellement des rampes configurées pour favoriser l'insertion des pênes respectifs dans lesdites gâches.

Les pênes de verrouillage peuvent être peu sensibles à l'environnement extérieur en étant "protégés" par l'élément de lisse lorsqu'ils sont disposés en son intérieur. Les différents éléments mécaniques du dispositif peuvent être très simples à réaliser, avec des cinématiques de déplacement simples et fiables. Ainsi, le déverrouillage et l'opération de rabat de la lisse peuvent être réalisés très rapidement, sans précautions particulières, et sans risque de grippage ou de dégradation des pênes de verrouillage et/ou de leurs poignées de commande. L'élément de lisse en tant que tel peut être réalisé en une seule pièce avec les paliers de guidage et, éventuellement, les arrêts des ressorts.

### BREVE DESCRIPTION DES DESSINS

Le présent exposé sera bien compris et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue générale d'une barrière d'enceinte pour animaux équipée d'un dispositif de lisse rabattable selon le présent exposé ;
- la figure 2 est une vue en coupe longitudinale dudit élément de lisse ;
- la figure 3 est une vue analogue à la figure 2, pour une variante ;
- la figure 4 est une vue analogue à la figure 2, pour une autre variante ; et
- la figure 5 vue de la partie agrandie V de la figure 1.

### DESCRIPTION DETAILLEE

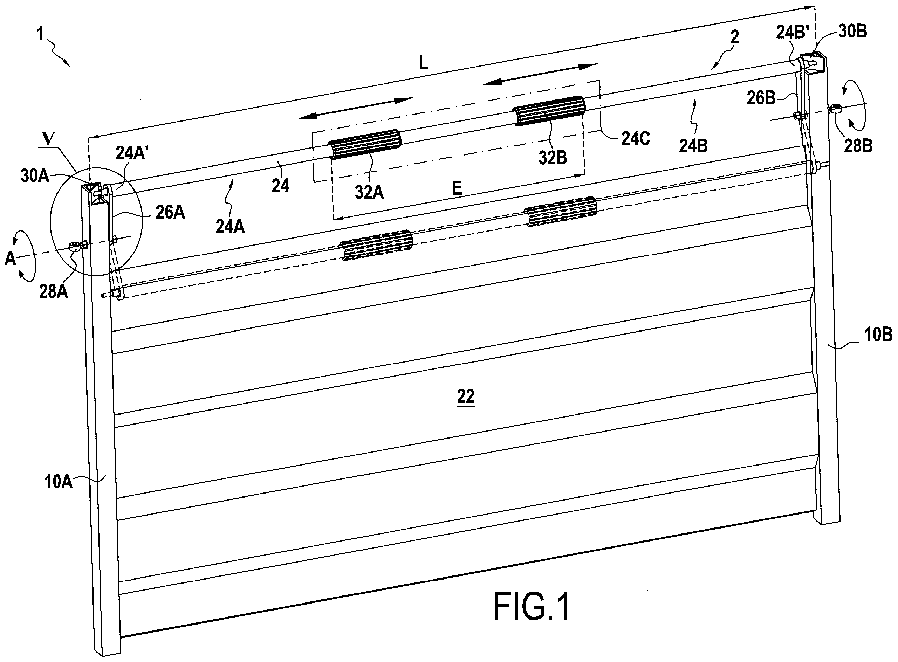

Le dispositif de barrière d'enceinte 1 illustré sur la figure 1 comprend des montants verticaux 10A, 10B entre lesquels s'étendent, d'une part, des éléments de paroi 22 (par exemple de type plaques, lisses, treillis, grillage ou analogue, ou toute combinaison de tels éléments) et, d'autre part, un dispositif de lisse rabattable 2. Ce dispositif de lisse rabattable comprend un élément de lisse 24 qui s'étend entre les montants 10A et 10B en leur étant relié de manière pivotante par des bras 26A, 26B fixés aux extrémités respectives 24A' et 24B' de l'élément de lisse.

Ce montage est réalisé de telle sorte que l'élément de lisse puisse pivoter autour d'un axe horizontal A entre une position active représentée en traits pleins et une position rabattue représentée en traits interrompus. A cet effet, les extrémités des bras 26A et 26B opposées à l'élément de lisse 24 sont reliées aux montants respectifs 10A et 10B par des dispositifs de type tourillon 28A, 28B qui sont alignés de manière à matérialiser l'axe de pivotement A.

Le dispositif de lisse rabattable 2 comprend des pênes de verrouillage, respectivement 30A et 30B qui sont portés par l'élément de lisse 24. Chacun de ces pênes est relié à une poignée de commande, respectivement 32A, 32B qui est située dans une zone centrale 24C de l'élément de lisse 24. Comme on le voit notamment sur la figure 1, cette zone centrale 24C est située dans le tiers central de l'élément de lisse. Ceci signifie que, de part et d'autre de cette zone centrale 24C s'étendent des zones latérales 24A et 24B ayant chacune une longueur au moins sensiblement égale à un tiers de la longueur L de l'élément de lisse 24. Ainsi, l'espacement maximal E entre les poignées 32A et 32B est de l'ordre du tiers de la longueur L. De manière générale, cet espacement maximal E peut être de l'ordre de 50cm à environ 1m. Ceci permet à ces deux poignées d'être manipulées simultanément par les deux mains d'une même personne.

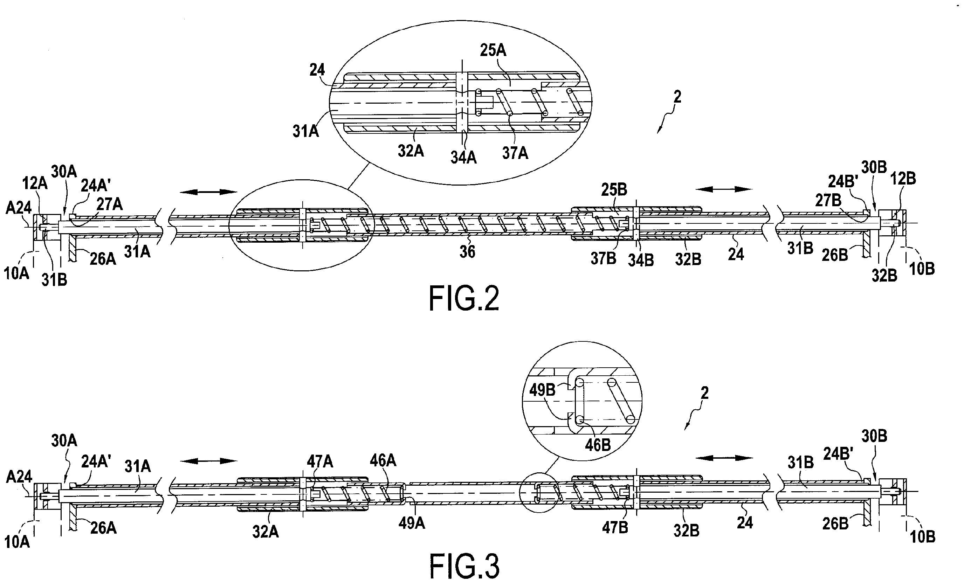

Comme on le voit mieux sur les figures 2 à 4, les pênes de verrouillage 30A et 30B s'étendent à l'intérieur de l'élément de lisse 24.

En l'espèce, cet élément de lisse est rectiligne. Il s'agit en l'espèce d'un tube creux d'axe horizontal. Ainsi, les pênes 30A et 30B sont disposés dans l'intérieur creux de ce tube. Le déplacement des pênes entre leurs positions de verrouillage et de déverrouillage s'opère par des translations selon l'axe A24 de l'élément de lisse. En l'espèce, pour favoriser le guidage des pênes lors de cette translation, chaque pêne comprend une partie de tige, respectivement 31A et 31B qui est disposée à l'intérieur de l'élément de lisse 24, et dont la section externe est comparable à la section interne du creux de l'élément de lisse 24, de sorte que la surface interne de l'élément de lisse joue le rôle d'un palier de guidage pour les déplacements des pênes de verrouillage en translations.

De plus, chaque pêne comprend une tête de verrouillage, respectivement 31B et 32B, qui est en l'espèce de section inférieure à celle de la partie de tige 31A et 31B et qui, dans la position de verrouillage dans laquelle ces têtes sont sorties de l'élément de lisse 24, coopèrent avec des gâches de verrouillage, respectivement 12A et 12B, portées par les montants respectifs 10A et 10B. Bien entendu, selon les dimensions des gâches, les têtes de verrouillage pourraient être plus grosses.

Bien entendu, le fait que les pênes de verrouillage s'étendent à l'intérieur de l'élément de lisse ne signifie pas qu'ils sont intégralement contenus à l'intérieur de cet élément puisque, au moins dans la position de verrouillage, au moins les têtes de verrouillage des pênes dépassent des extrémités 24A' et 24B' de l'élément de lisse. Bien entendu, selon les dimensions des gâches, on pourrait prévoir que les têtes de verrouillage des pênes présentent les mêmes dimensions diamétrales que les parties de tige 31A et 31B.

La longueur de chacune des parties de tige 31A et 31B est conséquente et représente par exemple au moins le tiers de la longueur L de l'élément de lisse 24, ce qui permet, alors que les parties actives de verrouillage sont situées aux extrémités de l'élément de lisse, de ramener les moyens de commande des pênes dans la région centrale 24C de l'élément de lisse.

On voit sur la figure 2 que les parties de tige s'étendent vers la région centrale de l'élément de lisse jusqu'à des zones de cet élément dans lesquelles sont ménagées des lumières, respectivement 25A et 25B. En effet, des éléments transversaux de liaison, respectivement 34A et 34B sont attachés aux extrémités internes des parties de tige opposées à leurs têtes de verrouillage, ces éléments transversaux de liaison traversant les lumières 25A et 25B. Par exemple, les éléments transversaux de liaison sont formés par des broches, goupilles ou analogue qui traversent l'élément de lisse 24 de part en part. Dans ce cas, les lumières 25A et 25B sont agencées par paires de lumières diamétralement opposées. Ces lumières forment des fentes longitudinales dans la paroi de l'élément de lisse 24. Par exemple, les éléments transversaux de liaison 34A et 34B peuvent être montés à force dans des perçages que présentent les parties de tige 31A et 31B, ou bien y être fixés par vissage ou par tout autre moyen, ou bien encore être soudés à ces parties de tige.

Ainsi, les extrémités des éléments transversaux de liaison dépassent sur la périphérie externe de l'élément de lisse. Ceci permet de les solidariser avec les poignées 32A et 32B qui sont situées à l'extérieur de l'élément de lisse.

En l'espèce, les poignées de commande comprennent ou sont formées par des manchons 32A, 32B qui sont disposés autour de l'élément de lisse et présentent des trous ou des renfoncements dans lesquels font saillie les extrémités des éléments de liaison 34A, 34B. Ainsi, les poignées sont solidarisées en translation longitudinale (c'est-à-dire dans le sens de la longueur de l'élément de lisse) avec les éléments transversaux de liaison et donc avec les pênes. Par exemple, les manchons précités peuvent être en matériau de type élastomère, plastique, composite ou autre, procurant un contact agréable avec les mains des utilisateurs et non sujets à la corrosion.

Le dispositif de lisse représenté comprend un rappel élastique qui sollicite les pênes de verrouillage 30A, 30B vers leurs positions de verrouillage. Dans l'exemple de la figure 2, ce rappel comprend un ressort 36, en particulier un ressort hélicoïdal, qui s'étend entre deux sièges d'appui respectivement solidaires en translation avec chacune des poignées 32A, 32B. Par exemple, ces sièges, respectivement 37A et 37B sont formés par des épaulements des parties de tige 31A et 31B situés à l'arrière (c'est-à-dire, davantage vers l'intérieur) des éléments transversaux de liaison 34A et 34B. Bien entendu, ces sièges d'appui pourraient prendre d'autres formes, et éventuellement être directement constitués par les faces arrière des éléments transversaux de liaison.

On comprend ainsi que les poignées sont rapprochées l'une de l'autre pour déverrouiller les pênes et, dès que l'une d'entre elles est lâchée, elle revient dans la position sollicitant le pêne correspondant vers sa position de verrouillage par ce rappel élastique. On note que les extrémités des lumières 25A et 25B forment des butées pour le déplacement des pênes de verrouillage.

La variante de la figure 3 est identique à celle de la figure 2, sauf en ce qui concerne la réalisation du rappel élastique des pênes vers leur position de verrouillage. Ainsi, la figure 3 comporte les mêmes références que la figure 2, sauf en ce qui concerne ce rappel élastique. En effet, en l'espèce, le rappel élastique comprend deux ressorts de rappel respectivement 46A et 46B, respectivement associés aux pênes 30A et 30B. Pour chaque pêne, le ressort est en appui entre un siège, respectivement 47A et 47B, qui est mobile avec la poignée, respectivement 32A et 32B, ce qui signifie que ce siège se déplace avec cette poignée lors de la translation de cette dernière (il est solidaire en translation avec la poignée). Par exemple, les sièges 47A et 47B peuvent être analogues aux sièges 37A et 37B décrits en référence à la figure 2. Du côté opposé à son siège, chaque ressort est en appui avec un arrêt fixe, respectivement 49A et 49B, qui est fixe par rapport au dispositif de lisse. Par exemple, cet arrêt fixe 49A, 49B peut être formé par un repli interne formé en creux sur la périphérie externe de l'élément de lisse. Dans l'exemple représenté sur la figure 3, le siège 49A ou 49B peut être formé par une ou plusieurs languettes, en particulier au moins deux languettes diamétralement opposées ou trois languettes réparties angulairement, découpées dans l'élément de lisse 24 et repliés vers son axe A24.

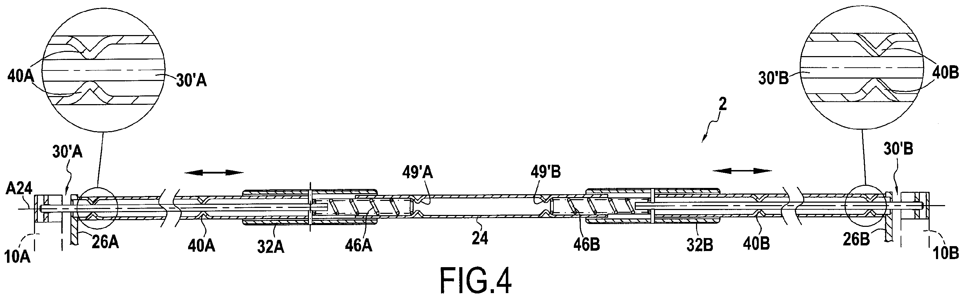

Cependant, ce repli interne pourrait également être formé par un bossage interne, formé en creux sur la périphérie externe de l'élément de lisse. C'est d'ailleurs ce que montre la figure 4, sur laquelle les arrêts fixes des ressorts 46A et 46B sont désignés par les références 49'A et 49'B. Cet arrêt pourrait également être formé par la présence d'une pièce de type fer plat notamment en U, rapportée dans l'élément de lisse par une ouverture transversale.

Par ailleurs, la figure 4 diffère des figures 2 et 3 par le fait que les pênes 30'A et 30'B sont formés par des tiges de section constante sur leur longueur, cette section étant notablement inférieure à la section interne de l'élément de lisse 24. Ainsi, pour guider la translation des pênes, le dispositif de lisse comprend, pour chaque pêne, au moins un palier de guidage, respectivement 40A et 40B. Pour chaque pêne de verrouillage, on peut prévoir deux paliers 40A, 40B espacés. Ces paliers sont en l'espèce formés par des projections internes de l'élément de lisse en l'espèce réalisés sous la forme de bossages en creux sur la périphérie externe de cet élément. Pour chaque palier ainsi formé, il peut s'agit de deux bossages diamétralement opposés ou d'une nervure annulaire. Les arrêts 49'A, 49'B précédemment évoqués peuvent être formés de la même manière. Bien entendu, ces paliers pourraient cependant être réalisés sous la forme de languettes découpées comme les languettes 49A et 49B de la figure 3. Les paliers pourraient également être formés par des pièces de type fer plat percé, rapportées aux extrémités ouvertes de l'élément de lisse, en travers de ces extrémités.

Dans les différents modes de réalisation représentés, les extrémités de l'élément de lisse sont fixées aux bras 26A et 26B précédemment évoqués. Ces bras peuvent s'étendre en travers des extrémités ouvertes de l'élément de lisse et présenter des perçages respectivement 27A et 27B à travers lesquels passent les pênes de verrouillage. Ces perçages peuvent également servir, par leurs bords, de paliers de guidage du déplacement de ces pênes.

Par ailleurs, dans les exemples représentés, les parties de tige 31A, 31B ou les pênes 30'A, 30'B s'étendent sur des longueurs conséquentes, correspondant globalement à l'écartement des poignées de commande par rapport aux extrémités respectives de l'élément de lisse. Cependant, on pourrait prévoir des variantes. Par exemple, les parties de tige 31A et 31B pourraient être plus courtes en étant reliées aux poignées de commande par des tiges de plus faible section ou par des câbles. On pourrait d'ailleurs prévoir que chaque pêne de verrouillage s'étende sur une longueur relativement faible par exemple de lors de 1 à 5 cm, et qu'un câble relie l'extrémité arrière du pêne de verrouillage à sa poignée de commande, alors qu'un ressort de rappel s'étend entre l'extrémité arrière du pêne et un arrêt, analogue aux arrêts 49A et 49B ou aux arrêts 49'A et 49'B en étant disposé seulement à quelques centimètres de l'extrémité de l'élément de lisse. De manière générale, les parties de tige 31A, 31B, les parties arrière des pênes de verrouillage 30'A, 30'B ou des câbles du type précité, forment des organes de renvoi, qui permettent de renvoyer la commande des pênes de verrouillage à distance des extrémités de l'élément de lisse.

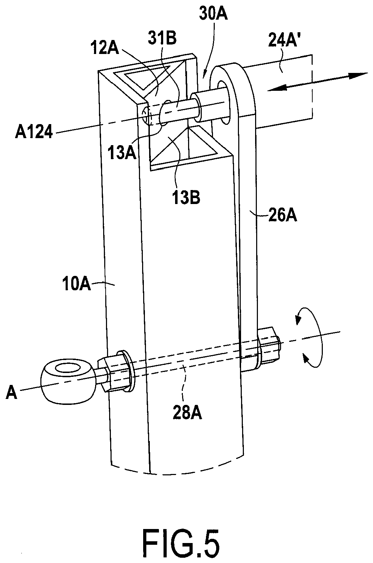

La figure 5 montre la partie supérieure du montant 10A. On voit le bras 26A et l'extrémité 24A' de l'élément de lisse 24, ainsi que la tête de verrouillage 31B du pêne de verrouillage 30A. On voit également la gâche 12A qui, par coopération avec ce pêne, verrouille l'élément de lisse dans sa position active. Cette gâche 12A comprend un perçage 13A dans lequel vient s'insérer la tête de verrouillage 31B du pêne 30A. Elle comprend également une rampe 13B qui est configurée pour favoriser l'insertion du pêne dans la gâche. En effet, cette rampe est inclinée de telle sorte qu'elle tend à ramener le pêne de verrouillage vers sa position de déverrouillage lorsque l'élément de lisse est ramené vers sa position active, jusqu'à ce que le pêne parvienne au droit du perçage et y pénètre sous l'effet du rappel élastique.

Bien que l'élément de lisse rabattable 24 qui vient d'être décrit soit en l'espèce situé en partie haute du dispositif de barrière, il pourrait bien entendu en aller autrement, l'élément de lisse pouvant être disposé dans toute tranche horizontale du dispositif de barrière et pouvant d'ailleurs pivoter indifféremment vers le bas (comme représenté) ou vers le haut pour passer de sa position active à sa position rabattue. On notera d'ailleurs que les pênes de verrouillage décrits ici servent en l'espèce à maintenir l'élément de lisse dans sa position active mais qu'ils pourraient bien entendu également servir à maintenir cet élément dans sa position rabattue, en coopérant avec des gâches disposées en conséquence. On notera en outre, que l'élément de lisse pourrait avoir une orientation différente de l'horizontale selon son usage et la conformation de la barrière d'enceinte.

De même, alors qu'on a fait référence à un élément de lisse rabattable, il pourrait y en avoir plusieurs, par exemple deux éléments de lisses fixés aux bras 26A, 26B, respectivement vers les extrémités et dans des régions centrales de ces bras.

## Revendications

1. Dispositif de lisse rabattable (2) pour une barrière d'enceinte (1) pour animaux d'élevage tels que du bétail, le dispositif comprenant un élément de lisse (24) configuré pour être disposé entre des montants de barrière (10A, 10B) en étant capable de pivoter autour d'un axe horizontal (A) entre une position active et une position rabattue, et des moyens de verrouillage pour verrouiller les extrémités de l'élément de lisse (24) par rapport aux montants (10A, 10B) dans la position active, **caractérisé en ce que** les moyens de verrouillage comprennent deux pênes de verrouillage (30A, 30B) portés par l'élément de lisse (24), chaque pêne de verrouillage étant relié à une poignée de commande (32A, 32B) située dans une zone centrale (24C) de l'élément de lisse (24) pour commander le déplacement du pêne de verrouillage entre des positions de verrouillage et de déverrouillage.

2. Dispositif de lisse selon la revendication 1, dans lequel la zone centrale (24C) est située dans le tiers central de l'élément de lisse (24).

3. Dispositif de lisse selon la revendication 1 ou 2, dans lequel les pênes de verrouillage (30A, 30B) s'étendent à l'intérieur de l'élément de lisse (24) tandis que les poignées de commande (32A, 32B) sont situées à l'extérieur dudit élément, chaque pêne de verrouillage (30A, 30B) étant relié à sa poignée de commande par un élément transversal de liaison (34A, 34B) traversant une lumière (25A, 25B) de la zone centrale (24C) de l'élément de lisse.

4. Dispositif de lisse selon l'une quelconque des revendications 1 à 3, comprenant pour chaque pêne de verrouillage (30A, 30B ; 30'A, 30'B) au moins un palier de guidage (27A, 27B ; 40A, 40B) du déplacement du pêne entre les positions de verrouillage et de déverrouillage.

5. Dispositif de lisse selon les revendications 3 et 4, dans lequel les paliers de guidage (40A, 40B) comprennent au moins une projection (40A, 40B) interne à l'élément de lisse (24), ladite projection comprenant optionnellement un repli interne formé en creux sur la périphérie externe de l'élément de lisse ou une pièce, en particulier de type fer plat, rapportée en travers de l'élément de lisse.

6. Dispositif de lisse selon l'une quelconque des revendications 1 à 5, dans lequel chaque poignée de commande (32A, 32B) comprend un manchon entourant localement l'élément de lisse (24).

7. Dispositif de lisse selon l'une quelconque des revendications 1 à 6, comprenant un rappel élastique (36 ; 46A, 46B) sollicitant les pênes de verrouillage (30A, 30B) vers leurs positions de verrouillage.

8. Dispositif de lisse selon la revendication 7, comprenant un ressort (36) commun aux deux pênes de verrouillage (30A, 30B), qui s'étend entre deux sièges (37A, 37B) respectivement solidaires de chacune des deux poignées (32A, 32B).

9. Dispositif de lisse selon la revendication 7, comprenant, pour chaque pêne de verrouillage (30A, 30B), un ressort (46A, 46B) coopérant avec un siège (47A, 47B) mobile avec la poignée (32A, 32B) du pêne de verrouillage (30A, 30B) et un arrêt (49A, 49B ; 49'A, 49'B) fixe par rapport à l'élément de lisse (24), ledit arrêt fixe comprenant optionnellement un repli interne formé en creux sur la périphérie externe de l'élément de lisse ou une pièce en particulier un fer plat, rapportée dans l'élément de lisse.

10. Dispositif de lisse selon l'une quelconque des revendications 1 à 9, comprenant deux bras (26A, 26B), fixés aux extrémités (24A', 24B') respectives de l'élément de lisse (24) et configurés pour être montés à pivotement sur les montants de barrière.

11. Dispositif de lisse selon la revendication 10, dans lequel les bras (26A, 26B) s'étendent en travers des extrémités (24A', 24B') de l'élément de lisse (24).

12. Dispositif de lisse selon la revendication 11, prise en combinaison avec la revendication 3, dans lequel les portions des bras (26A, 26B) qui s'étendent en travers des extrémités de l'élément de lisse (24) présentent des perçages (27A, 27B) pour le passage des pênes de verrouillage respectifs (30A, 30B ; 30'A, 30'B).

13. Dispositif de barrière d'enceinte pour animaux d'élevage tels que du bétail, comprenant une structure de barrière (1) ayant des montants de barrière (10A, 10B) et un dispositif de lisse (24) selon l'une quelconque des revendications 1 à 12 qui est disposé entre lesdits montants.

14. Dispositif de barrière selon la revendication 13, **caractérisé en ce que** les montants de barrière présentent des gâches (12A, 12B) coopérant avec les pênes de verrouillage respectifs dans leurs positions de verrouillage, le dispositif de barrière présentant optionnellement des rampes (13B) configurées pour favoriser l'insertion des pênes respectifs dans lesdites gâches.

## Patentansprüche

1. Klappbalkenvorrichtung (2) für eine Umschließungsbarriere (1) für Nutztiere wie Rinder, wobei die Vorrichtung ein Balkenelement (24) umfasst, das dazu ausgebildet ist, zwischen Barrierepfosten (10A, 10B) angeordnet zu werden, und dabei geeignet ist, zwischen einer aktiven Position und einer heruntergeklappten Position um eine horizontale Achse (A) zu verschwenken, sowie Verriegelungsmittel, um die Enden des Balkenelements (24) in Bezug auf die Pfosten (10A, 10B) in der aktiven Position zu verriegeln, **dadurch gekennzeichnet, dass** die Verriegelungsmittel zwei Verriegelungsriegel (30A, 30B) umfassen, die von dem Balkenelement (24) getragen werden, wobei jeder Verriegelungsriegel mit einem Betätigungsgriff (32A, 32B) verbunden ist, der sich in einem mittleren Bereich (24C) des Balkenelements (24) befindet, um die Bewegung des Verriegelungsriegels zwischen der Verriegelungs- und der Entriegelungsposition zu steuern.

2. Balkenvorrichtung nach Anspruch 1, bei der sich der mittlere Bereich (24C) im mittleren Drittel des Balkenelements (24) befindet.

3. Balkenvorrichtung nach Anspruch 1 oder 2, bei der sich die Verriegelungsriegel (30A, 30B) innerhalb des Balkenelements (24) erstrecken, während sich die Betätigungsgriffe (32A, 32B) außerhalb des Elements befinden, wobei jeder Verriegelungsriegel (30A, 30B) mit seinem Betätigungsgriff durch ein Querverbindungselement (34A, 34B) verbunden ist, das durch eine Öffnung (25A, 25B) des mittleren Bereichs (24C) des Balkenelements hindurch verläuft.

4. Balkenvorrichtung nach einem der Ansprüche 1 bis 3, die für jeden Verriegelungsriegel (30A, 30B; 30'A, 30'B) wenigstens ein Lager zum Führen (27A, 27B; 40A, 40B) der Bewegung des Riegels zwischen der Verriegelungs- und der Entriegelungsposition umfasst.

5. Balkenvorrichtung nach den Ansprüchen 3 und 4, bei der die Führungslager (40A, 40B) wenigstens einen Vorsprung (40A, 40B) innerhalb des Balkenelements (24) umfassen, wobei der Vorsprung optional einen vertieft ausgebildeten Innenumschlag am Außenumfang des Balkenelements oder ein Teil umfasst, insbesondere vom Typ Flacheisen, das zu dem Balkenelement quer angebracht ist.

6. Balkenvorrichtung nach einem der Ansprüche 1 bis 5, bei der jeder Betätigungsgriff (32A, 32B) eine Manschette umfasst, die das Balkenelement (24) lokal umgibt.

7. Balkenvorrichtung nach einem der Ansprüche 1 bis 6, umfassend eine elastische Rückstellung (36; 46A, 46B), welche die Verriegelungsriegel (30A, 30B) in ihre Verriegelungspositionen belastet.

8. Balkenvorrichtung nach Anspruch 7, umfassend eine Feder (36), die den beiden Verriegelungsriegeln (30A, 30B) gemeinsam ist und die sich zwischen zwei Sitzen (37A, 37B) erstreckt, welche jeweils mit jedem der beiden Griffe (32A, 32B) fest verbunden sind.

9. Balkenvorrichtung nach Anspruch 7, umfassend für jeden Verriegelungsriegel (30A, 30B) eine Feder (46A, 46B), welche mit einem Sitz (47A, 47B) zusammenwirkt, der mit dem Griff (32A, 32B) des Verriegelungsriegels (30A, 30B) beweglich ist, sowie einen Anschlag (49A, 49B; 49'A, 49'B), der in Bezug auf das Balkenelement (24) fest ist, wobei der feste Anschlag optional einen vertieft ausgebildeten Innenumschlag am Außenumfang des Balkenelements oder ein Teil, insbesondere ein Flacheisen umfasst, das in dem Balkenelement angebracht ist.

10. Balkenvorrichtung nach einem der Ansprüche 1 bis 9, umfassend zwei Arme (26A, 26B), die an den jeweiligen Enden (24A', 24B') des Balkenelements (24) befestigt sind und dazu ausgebildet sind, an den Barrierepfosten schwenkbar angebracht zu werden.

11. Balkenvorrichtung nach Anspruch 10, bei der sich die Arme (26A, 26B) zu den Enden (24A', 24B') des Balkenelements (24) quer erstrecken.

12. Balkenvorrichtung nach Anspruch 11, in Kombination mit Anspruch 3, bei der die Abschnitte der Arme (26A, 26B), die sich quer zu den Enden des Balkenelements (24) erstrecken, Bohrungen (27A, 27B) für den Durchgang der jeweiligen Verriegelungsriegel (30A, 30B; 30'A, 30'B) aufweisen.

13. Umschließungsbarrierevorrichtung für Nutztiere wie Rinder, umfassend eine Barrierestruktur (1) mit Barrierepfosten (10A, 10B) und eine Balkenvorrichtung (24) nach einem der Ansprüche 1 bis 12, die zwischen den Pfosten angeordnet ist.

14. Barrierevorrichtung nach Anspruch 13, **dadurch gekennzeichnet, dass** die Barrierepfosten Schließbleche (12A, 12B) aufweisen, die mit den jeweiligen Verriegelungsriegeln in ihren Verriegelungspositionen zusammenwirken, wobei die Barrierevorrichtung optional Rampen (13B) aufweist, die dazu ausgebildet sind, das Einführen der jeweiligen Riegel in die Schließbleche zu begünstigen.

## Claims

1. A hinged rail device (2) for an enclosure barrier (1) for farm animals such as livestock, the device comprising a rail element (24) configured to be disposed between barrier posts (10A, 10B) by being able to pivot about a horizontal axis (A) between an active position and a folded position, and locking means for locking the ends of the rail element (24) relative to the posts (10A, 10B) in the active position, **characterized in that** the locking means comprise two locking bolts (30A, 30B) carried by the rail element (24), each locking bolt being connected to a control handle (32A, 32B) located in a central area (24C) of the rail element (24) to control the movement of the locking bolt between locked and unlocked positions.

2. The rail device according to claim 1, wherein the central area (24C) is located in the central third of the rail element (24).

3. The rail device according to claim 1 or 2, wherein the locking bolts (30A, 30B) extend inside the rail element (24) while the control handles (32A, 32B) are located outside said element, each locking bolt (30A, 30B) being connected to its control handle by a transverse connection element (34A, 34B) passing through an opening (25A, 25B) of the central area (24C) of the rail element.

4. The rail device according to any one of claims 1 to 3, comprising for each locking bolt (30A, 30B; 30'A, 30'B) at least one guide bearing (27A, 27B; 40A, 40B) guiding the movement of the bolt between the locked and unlocked positions.

5. The rail device according to claims 3 and 4, wherein the guide bearings (40A, 40B) comprise at least one projection (40A, 40B) internal to the rail element (24), said projection comprising optionally a recessed internal fold formed on the outer periphery of the rail element or an insert, particularly of the flat iron type, across the rail element.

6. The rail device according to any one of claims 1 to 5, wherein each control handle (32A, 32B) comprises a sleeve locally surrounding the rail element (24).

7. The rail device according to any one of claims 1 to 6, comprising an elastic return (36; 46A, 46B) urging the locking bolts (30A, 30B) towards their locking positions.

8. The rail device according to claim 7, comprising a spring (36) common to the two locking bolts (30A, 30B), which extends between two seats (37A, 37B) respectively secured to each of the two handles (32A, 32B).

9. The rail device according to claim 7, comprising, for each locking bolt (30A, 30B), a spring (46A, 46B) cooperating with a seat (47A, 47B) movable with the handle (32A, 32B) of the locking bolt (30A, 30B) and a stopper (49A, 49B; 49'A, 49'B) fixed relative to the rail element (24), said fixed stopper comprising optionally a recessed internal fold formed on the outer periphery of the rail element or an insert, particularly a flat iron, in the rail element.

10. The rail device according to any one of claims 1 to 9, comprising two arms (26A, 26B), fixed to the respective ends (24A', 24B') of the rail element (24) and configured to be pivotally mounted on the barrier posts.

11. The rail device according to claim 10, wherein the arms (26A, 26B) extend across the ends (24A', 24B') of the rail element (24).

12. The rail device according to claim 11, taken in combination with claim 3, wherein the portions of the arms (26A, 26B) which extend across the ends of the rail element (24) have bores (27A, 27B) for the passage of the respective locking bolts (30A, 30B; 30'A, 30'B).

13. An enclosure barrier device for farm animals such as livestock, comprising a barrier structure (1) having barrier posts (10A, 10B) and a rail device (24) according to any one of claims 1 to 12 which is disposed between said posts.

14. A barrier device according to claim 13, **characterized in that** the barrier posts have strikes (12A, 12B) cooperating with the respective locking bolts in their locking positions, the barrier device having optionally ramps (13B) configured to promote the insertion of the respective bolts in said strikes.
